# EUROPEAN PATENT SPECIFICATION

(11) **EP 2 986 778 B1**
(45) Date of publication and mention of the grant of the patent: **26.09.2018**
(21) Application number: 14727291.8
(22) Date of filing: 16.04.2014
(51) Int. Cl.: D21H 25/00, D21H 27/00, D21F 1/00, D06M 13/02, D06M 13/03, D06M 13/07, D06M 13/46, D06M 13/467, D06M 13/224, B05D 5/08, D06M 13/148, D06M 13/473, D06M 15/227, D21F 5/18, D06M 15/643

(54) **USE OF COMPOSITION FOR HIGH PERFORMANCE ANTI-ADHESION TO FABRICS, AND METHOD OF REDUCING ADHESION BETWEEN A TISSUE WEB AND A FABRIC SURFACE.**
VERWENDUNG EINER ZUSAMMENSETZUNG FÜR HOCHLEISTUNG ANTIHAFTUNG ZUR TEXTILIEN, UND VERFAHREN ZUR REDUZIERUNG DER HAFTUNG ZWISCHEN PAPIERBAHN UND GEWEBE.
UTILISATION D'UNE COMPOSITION POUR DES APPLICATIONS D'ANTI-ADHÉSION HAUTES PERFORMANCES SUR TISSUS ET PROCÉDÉ DE RÉDUCTION DE L'ADHÉSION ENTRE UNE NAPPE DE PAPIER ET UNE SURFACE EN TISSU.

(30) Priority: 18.04.2013 US 201361813286 P
(43) Date of publication of application: 24.02.2016
(73) Proprietor: Solenis Technologies Cayman, L.P., 8200 Schaffhausen (CH)
(72) Inventor: CHOI, Doeung, David, Hockessin, DE 19707 (US); SHAROYAN, Davit, E., Hockessin, DE 19707 (US); DILKUS, Christopher, P., Woodlynne, NJ 08107 (US)
(74) Representative: LKGLOBAL Lorenz & Kopf PartG mbB Patentanwälte
(86) International application number: PCT/US2014/034270
(87) International publication number: WO 2014/172405

(56) References cited:
- US-A- 4 149 978
- US-A- 4 439 330
- US-A- 4 792 409
- US-A1- 2012 045 587
- US-A1- 2013 048 238

## Description

### FIELD OF THE INVENTION

The present invention provides for the use of a composition and method for the improvement of through air drying (TAD) fabric release in applications such as tissue and towel making processes. The method comprises treating the surface of a fabric in structured sheet making applications of a tissue machine using compositions containing hydrophobic quaternary amines in combination with other hydrophobes and surfactants.

### BACKGROUND OF THE INVENTION

A tissue making process for the manufacture of products such as facial tissue, bathroom tissue and paper towels consists of the formation of a wet tissue sheet from an aqueous slurry of pulp and chemical additives followed by the removal of water from the wet tissue. Water removal can be accomplished by pressing the wet tissue onto, for example, a Yankee cylinder or Yankee drier, which terms are used interchangeably herein. Until recently, tissue paper was produced on Dry Crepe Crescent Formers and Through Air Drying (TAD) processes. Through air drying (TAD) processes include transfer of a paper web onto a TAD fabric, which has a 3-dimensional character and gives the wet sheet structure and pattern, so that when dry, the pattern remains in the tissue. This is accomplished through a transfer of hot air through the wet tissue providing for water removal and drying the sheet. The structured or patterned tissue is then transferred to a Yankee cylinder for further drying and creping. Through air drying (TAD) processes allows for a generation of higher quality tissue with increased bulk and softness, higher strength and absorption.

Upon the reduction of water content fibers come into close proximity with each other and the degree of association and bonding grows significantly. Fibers not only adhere to each other but also tend to adhere to the fabric. Increased tissue adhesion onto the fabric surface is not desirable since it may affect the sheet structure, result in formation of fiber deposits on the fabric surface and create complications in tissue release from the fabric and its further transfer to, for example, the Yankee drier. To avoid these undesirable effects, a number of treatments have been utilized including modifications in fabric cover materials, and/or application of various fabric release agents to aid in the separation of the tissue from the fabric. Fabric release agents are generally applied to the fabric surface prior to transfer of the sheet from a forming fabric to the release fabric.

Recent advances in the area of tissue manufacture offer the high bulk of a TAD process and the speed and energy efficiency of Dry Crepe Tissue (DCT). Processes such as Metso's NTT process and Voith's Advance Tissue Molding System (ATMOS) process which use a textured or structured fabric or belt.

Hydrophobic materials such as silicone oil, mineral and vegetable oils, and polyalphaolefins have been used in treating TAD fabric. The applications of these chemistries are not always simple and straightforward since hydrophobic materials are being added to an aqueous system. In many cases these hydrophobic materials are mixed with surfactants. Addition of surfactants, such as non-ionic surfactants, to hydrophobic materials has beneficial effects since the surfactant helps in emulsifying the hydrophobic materials (e.g. mineral oils) and promotes more efficient delivery and spread of hydrophobes on surfaces such as TAD fabric or Yankee dryer surfaces and could have beneficial effects on metal, fiber, and other surfaces.

U.S. Patent No. 8,071,667 teaches one or more (poly)C₅-C₂₀ alpha olefins in combination with one or more surfactants for use in releasing a paper web from the fabric in through air drying processes and/or from a Yankee dryer. The claimed compositions comprise between 99% and 60% alpha olefins and 1% to 40% surfactants.

U.S. Patent Application No. 2005/0241791 discloses a method of making a cellulosic tissue sheet by treating the web surface of the tissue machine with a chemical debonding agent. The chemical debonding agent comprises an oleyl imidazolium compound. The composition further contains a lubricant and a surfactant. The composition is applied to the tissue web and the chemical debonding agent is distributed though the entire thickness of the web by subjecting the web to vacuum suction. It is suggested that the composition is applied to the web between a rush transfer and the through-air drying operation or between first and second through-air drying operations.

U.S. Patent Application No. 2012/0045587 relates to compositions and methods for reducing adhesion between the wet paper web and roll surfaces in a papermaking process. U.S. Patent No. 4,439,330 describes concentrated textile treatment compositions containing from 12.3% to 25% of water-insoluble cationic fabric softener or of a mixture thereof with a water-insoluble nonionic fabric softener in a weight ratio of cationic:nonionic softener of at least 2.5:1, and 0.1% to 3% of an specific alkoxylated amine, or ammonium derivative thereof.

U.S. Patent No. 4,149,978 describes textile treatment compositions comprising a water-insoluble cationic fabric softener and C12-C40 hydrocarbon, optionally together with a water-soluble cationic surfactant. In two components systems, the ratio of cationic softener to hydrocarbon is from 5:1 to 1:3.

U.S. Patent No. 4,792,409 describes cold water dispersible/emulsifiable substantially water-free fabric softener liquid concentrates composed of a fatty quaternary ammonium salt which contains at least one long chain alkyl group of 8 to 30 carbon atoms and an oil or substantially water-insoluble compound having oily/fatty properties.

### SUMMARY OF THE INVENTION

The present invention relates to the use of compositions and methods for reducing the adhesion between a tissue web and TAD fabric surfaces used in tissue production processes hence improving the release of the tissue web from the TAD fabric surface. The method comprises the application of a composition comprising hydrophobic aminoamide quats in combination with a) at least one hydrophobic component other than an aminoamide, c) one or more surfactants and/or mixtures thereof to a TAD fabric surface.

In one embodiment, the present invention also relates to a method of reducing paper adhesion to fabric surfaces by applying a composition of cyclyzed or linear quaternized hydrophobic aminoamides or mixtures thereof, mineral oil; and a surfactant to the fabric surface. The proposed formulations can be applied by sprays or roller applicators to the surfaces of interest.

### DETAILED DESCRIPTION OF THE INVENTION

The present invention relates to the use of compositions and methods for the reduction of adhesion between forming tissue web and TAD fabric surfaces. The composition comprises hydrophobic amines, namely low molecular weight hydrophobic imidazolines and non-cyclic hydrophobic aminoamide quats and/or mixtures thereof, with at another hydrophobic component such as mineral and vegetable oils and surfactants such as linear, polyethylene glycol esters, mono- and di-esters of various fatty acids such as, oleic, stearic and palmitic acids and mixtures thereof.

The invention also relates to applying a hydrophobic composition or aqueous emulsion to a surface of a tissue machine thus reducing the adhesion of the tissue to the fabric and improves tissue release.

The term "hydrophobic amines" are defined as any low molecular weight amine or ammonium containing compound with the nitrogen of an amine or ammonium group bound to a hydrophobic or fatty group such as a hydrocarbon or fluorocarbon chain. The amines can be linear or branched fatty alkyl amines, ammonium compounds, cyclic imidazolines, linear aminoamides, and the like.

The low molecular weight hydrophobic amines of the present invention were found to be very efficient in reducing adhesion of tissue paper to, for example TAD fabric and for TAD fabric release applications. Hydrophobic amines include, for example, quaternized aminoamides and/or quaternized imidazoline cyclic structures with one or two hydrophobic groups attached and mixtures thereof. The composition can comprise quaternized linear aminoamides; quaternized cyclic imidazolines and/or mixtures thereof.

The following Formula I and Formula II are representative of the quaternized aminoamides that can be used in the present invention: 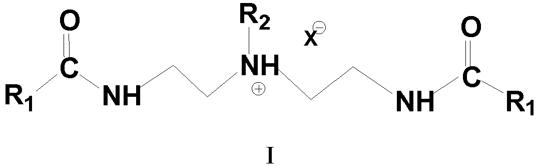 and 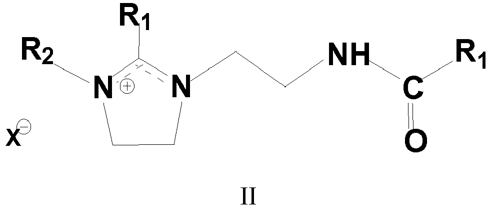 wherein
R₁ can be a saturated or unsaturated, linear or branched, C₁₂ - C₂₂ aliphatic groups and can be C₁₆ - C₁₈ aliphatic groups
R₂ can be a methyl- or ethyl- group; and
X can be a counter ion such as an ethylsulfate or methylsulfate.

The amines of the present invention were produced by a reaction between fatty acids (e.g. oleic acid, palmitic acid, or stearic acid) with di-ethylenetriamine or aminoethylethanolamine and subsequent quaternization of the resulting aminoamides by di-ethylsulfate, di-methylsulfate or acetic acid. The number of hydrophobic chains depends on the ratio of fatty acid and amine, and can be in a ratio of from about 1:1 and can be in a ratio of about 2:1.

The degree of cyclization or ring closure of the imidazoline quaternized products depends on reaction conditions. Under specific conditions it can be up to about 90% cyclized. In other cases it can be as little as 10% cyclized, resulting in a mixture of cyclized imidazoline quats and linear aminoamide quats. Imidazolines and non-cyclic aminoamide quats absorb strongly to negatively charged surfaces of materials such as fabrics, metals, and fibers, to make them hydrophobic.

The term "mineral oil", is defined to mean oils from mineral sources and can be a mixture of linear, branched and aromatic hydrocarbons, paraffins, and waxes. The term "surfactants or non-ionic surfactants", is used to define compositions comprising but not limited to, glycol and mono- and di-esters of various fatty acids. Other examples of non-ionic surfactants can include, for example, linear or branched alcohol ethoxylates, alcohol alkoxylates, polyoxyethylene-polyoxypropylene block copolymers, aliphatic polyethers, ethoxylated polymethylalkylsiloxanes, alkyl polyglucoside, ethoxylated sorbitans derivatives, sorbitans fatty acid esters, alkyl phenyl ethoxylates, and alkoxylated amines.

We have found through extensive investigation that mixtures of quaternized imidazolines and aminoamides are more effective in reducing the adhesion between a tissue web and a TAD fabric surface than mineral oils, poly-alphaolefins and other hydrophobic materials typically used in TAD fabric release applications. We have also found that quaternized imidazolines and aminoamides in combination with additional hydrophobic materials such as mineral or vegetable oils are more effective in TAD fabric release applications as compared with compositions containing the individual components.

Through this work we found that imidazoline and aminoamide quats are more effective in fabric release applications than alpha olefins and mineral oil. Therefore, one would assume that an increase in alpha olefins or mineral oil content in formulations with imidazoline quats would reduce the effectiveness of the imidazoline quat-mineral oil mixture. However, we have found that fabric release improves when the surface of a fabric is treated with a composition containing a mixture of quaternized aminoamides and at least one other hydrophobic component other than an aminoamide, such as for example mineral oil, wherein the other hydrophobic component comprises up to about 60% by wt. of the total composition and can comprise from about 5% to about 40% by wt. of the total composition. Enhancement of TAD fabric release with addition of the mineral oil to the mixture of the quaternized aminoamide was totally unexpected. Additionally, it was found that combinations of the quaternized aminoamide with at least one other hydrophobic active besides an aminoamide; and a non-ionic surfactant, cause a reduction of adhesion between the tissue web and TAD fabric.

In the present invention, a through air drying (TAD) fabric release composition comprises quaternized aminoamide(s); at least one hydrophobic component other than an aminoamide; and a non-ionic surfactant(s); wherein the quaternized aminoamides are low molecular weight imidazoline and non-cyclic aminoamide quats and/or mixtures thereof and comprise from 40%-75% by wt. of total composition; the at least one hydrophobic component is mineral oil, vegetable oil, silicon oil, polyalphaolefins and/or mixtures thereof comprising from 5% to 40% by wt. of the total composition; and the surfactant(s) are glycol and/or esters thereof, mono- and di-esters of fatty acids, and/or mixtures thereof and comprise from 10% to 30% by wt. of the total composition.

In one embodiment a formulation comprising a) a mixture of hydrophobic imidazoline, and hydrophobic non-cyclic aminoamide, b) mineral oil and c) polyethylene glycol di-esters, such as oleic, stearic and palmitic acids; is used to reduce the adhesion between tissue and TAD fabric.

The present invention will now be described with reference to a number of specific examples that are to be regarded as illustrative and not restricting the scope of the present invention.

### EXAMPLES

The present compositions were evaluated for their ability to reduce adhesion of wet tissue to TAD fabric materials. A number of formulations were tested on a TAD Fabric Release tester designed by Hercules Inc to measure the affects of the compositions on resultant forces of adhesion and a Zwick release test (see Choi, D.D., "New Simulation Capability Turns Art into Science for Structured Tissue and Towel Making Processes," Proceedings of Tissue 360 Forum, PaperCon 2013, 2013). The formulations were tested as aqueous solutions with levels of treatments at 60 mg/m² and 120 mg/m².

Imidazolines listed in the Tables 1A, 1B and 1C below include the following:
Imidazoline A, is a mixture of cyclized imidazoline and linear mono- and bis- amides formed from the reaction of oleic acid and diethylenetriamine (with 2:1 ratio), quaternized with dimethyl sulfate.

The efficacies of the present compositions were determined by comparing the results of experiments performed on TAD fabric surfaces treated with the present composition versus blank experiments wherein the TAD fabric surfaces were not treated with the compositions of the present invention.

Table 1 summarizes the results, which are reported as absolute values of adhesion force for the blanks (untreated surfaces) and treated surfaces (columns 3 and 4) as well as relative effects expressed in % reduction vs. blank treatment (columns 5 and 6). The data presented is an average of 6 measurements per treatment.

### Example#1

A. A number of experiments on TAD Fabric Release were done using mixtures of Imidazoline A; mineral oil and a non-ionic surfactant as described above. The content of non-ionic surfactant was kept constant at 20% and the amount of Imidazoline A and mineral oil were varied from 0% to 80%. The mixtures were tested for TAD fabric release at 60 mg/m² and 120 mg/m² addition levels.
B. A second set of experiments were accomplished wherein the amount of non-ionic surfactant in the mixture was 10% and kept constant. The amount of Imidazoline A and mineral oil were varied from 0% to 90%. The mixtures were tested for TAD fabric release at 60mg/m² and 120 mg/m² addition levels using the test methods referenced above.
C. A third set of experiments were done wherein the amount of non-ionic surfactant in the mixture was 4% and kept constant. The amount of Imidazoline A and mineral oil were varied from 0% to 96%. The mixtures were tested for TAD fabric release at 60mg/m² and 120 mg/m² addition levels using the test methods referenced above.

### TABLES 1A, 1B and 1C

**Table 1A. PEG 400 DO - 20% (the example with 60% of imidazoline A is in accordance with the appended claims).**

| Imidazoline A | Mineral oil | Adhesion, N | Adhesion, N | Adhesion reduction, % | |
|---|---|---|---|---|---|
| % | % | 120mg | 60mg | 120 mg | 60 mg |
| 0 | 0 | 29.72 | 29.72 | | |
| 80 | 0 | 14.55 | 19.99 | 51.04 | 32.74 |
| 60 | 20 | 12.98 | 16.42 | 56.33 | 44.75 |
| 40 | 40 | 11.94 | 15.70 | 59.82 | 47.17 |
| 20 | 60 | 13.83 | 19.02 | 53.26 | 36.01 |
| 0 | 80 | 19.48 | 23.85 | 34.45 | 19.17 |

**Table 1B. PEG 400 DO - 10% (the examples with 75%, 60% and 45% by weight of imidazoline A are in accordance with the appended claims).**

| Imidazoline A % | Mineral oil % | Adhesion N , 120 | Adhesion, N 60mg | Adhesion 120 | reduction, % 60 mg |
|---|---|---|---|---|---|
| 0 | 0 | 26.05 | 24.36 | | |
| 90 | 0 | 16.40 | 15.49 | 37.04 | 36.41 |
| 7 | 15 | 14.02 | 16.11 | 46.18 | 33.87 |
| 6 | 30 | 13.39 | 14.34 | 48.60 | 41.13 |
| 4 | 45 | 13.88 | 13.64 | 46.72 | 44.01 |
| 3 | 60 | 14.22 | 17.54 | 45.41 | 28.00 |
| 15 | 75 | 15.22 | 19.34 | 41.57 | 20.61 |
| 0 | 90 | 20.40 | 18.60 | 21.69 | 23.65 |

**Table 1C. PEG 400 DO-4% (not in accordance with the appended claims).**

| Imidazoline A | Mineral oil | Adhesion, N | Adhesion, N | Adhesion reduction, % | |
|---|---|---|---|---|---|
| % | % | 120 mg | 60 mg | 120mg | 60 mg |
| 0 | 0 | 33.14 | 28.76 | | |
| 96 | 0 | 17.56 | 24.00 | 47.01 | 16.55 |
| 80 | 16 | 16.90 | 22.42 | 49.00 | 22.05 |
| 64 | 32 | 15.42 | 23.26 | 53.49 | 19.12 |
| 48 | 48 | 17.97 | 23.62 | 47.78 | 17.88 |
| 32 | 64 | 18.76 | 24.36 | 43.38 | 15.29 |
| 16 | 80 | 21.32 | 25.03 | 35.67 | 12.99 |
| 0 | 96 | 25.31 | 26.63 | 23.63 | 7.41 |

In respect to individual components mixed with fixed amounts of surfactant, it can be seen that Imidazoline A is more efficient than mineral oil in TAD fabric release tests. Adhesion values for Imidazoline A were lower than those of mineral oil. It can also be observed from the Examples above in all three testing cases that mixtures of Imidazoline A with mineral oil were more efficient than Imidazoline A by itself.

For example, in series with 20% surfactant in each formulation the adhesion values from mixtures with 80% Imidazoline A and 80% mineral oil are 14.55 and 19.48 N, respectively. Hence for the mixture containing 40% Imidazoline A and 40% mineral oil one might expect the adhesion value to be around 17.02 N. In fact the adhesion value is 11.94 N which is 29.8% lower than the expected value. Similarly, in the series with 4% surfactant the adhesion values for 96% Imidazoline A and 96% mineral oil are 17.56 and 25.31 N, respectively. The adhesion value for a mixture containing 64% Imidazoline A and 32% mineral oil is 15.42 N, which is 20.3% lower than expected from the adhesion values of
individual components. The enhancement in performance of the imidazoline when mixed with the less efficient component, mineral oil, was totally unexpected.

It was also seen that the percentage range for Imidazoline A and mineral oil within which enhancement of fabric release was observed changed depending on whether a surfactant was used and the surfactant load. The range of enhancement is defined as the % range of the mixtures of mineral oil and Imidazoline A that had lower adhesion as compared with Imidazoline A alone. For example, enhancement of fabric release was found to be in the range of 20% to 60% Imidazoline A for formulations with 20% surfactant, from 30% to 75% Imidazoline A for formulations with 10% surfactant and from 48% to 80% Imidazoline A for formulations with 4% surfactant. Overall, enhancement of fabric release was observed over a range of formulations containing from about 20% to about 80% Imidazoline A. Additional enhancement was seen when the formulations contained from about 40% to about 75% Imidazoline A.

### Example #2

Comparative testing was run on a TAD fabric release tester with three formulations. Results can be seen in Table 2. Samples tested were a control having no treatment; Product B was made according to the present invention, which is a three component formulation containing Imidazoline A, mineral oil and a non-ionic surfactant. These were tested next to mineral oil/surfactant and poly-alphaolefin/surfactant two component formulations. Testing results demonstrated that Product B having Imidazoline A as a component significantly outperforms minearal oil and poly-alphaolefine formulations in adhesion reduction.

**Table 2**

| Product/Formulation | Adhesion, N | | Adhesion reduction, % | |
|---|---|---|---|---|
| | 60mg/m2 | 120mg/m2 | 60mg/m2 | 120mg/m2 |
| No treatment | 29.06 | 27.05 | | |
| Product B | 17.79 | 13.13 | 38.77 | 51.47 |
| Mineral oil/Surfactant | 24.01 | 21.13 | 17.39 | 21.89 |
| PAO/Surfactant | 26.64 | 25.63 | 8.34 | 5.24 |

While the present invention has been described with respect to particular embodiments thereof, it is apparent that numerous other forms and modifications will be obvious to those skilled in the art. The invention described in this application generally should be construed to cover all such obvious forms and modifications, which are within the true scope of the present invention.

## Claims

1. Use of a composition comprising:
a) hydrophobic quaternized aminoamide(s);
b) at least one hydrophobic component other than an aminoamide; and
c) non-ionic surfactant(s);
wherein the hydrophobic quaternized aminoamide(s) are low molecular weight imidazoline and non-cyclic aminoamide quats and/or mixtures thereof and comprise from 40% to 75% by weight of the total composition; the at least one hydrophobic component is mineral oil, vegetable oil, silicon oil, polyalphaolefins and/or mixtures thereof and comprises from 5% to 40% by weight of the total composition; and the non-ionic surfactant(s) are glycol and/or esters thereof, mono- and di-esters of fatty acid, and/or mixtures thereof and comprise from 10% to 30% by weight of the total composition,
for reducing adhesion of wet tissue from a through air drying (TAD) fabric surface.

2. The use according to claim 1, wherein the quaternized aminoamide(s) is a low molecular weight imidazoline having the structure of Formula I; 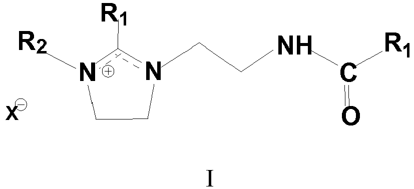 or
a non-cyclic aminoamides having the structure of Formula II; 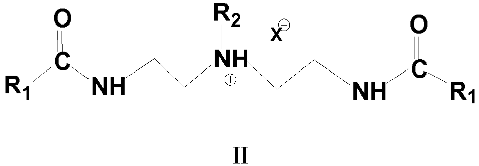 and mixtures thereof; wherein
R₁ is a linear or branched, saturated or unsaturated, C₁₂ - C₂₂ aliphatic group;
R₂ is a methyl- or ethyl- group; and
X is counter ion.

3. The use according to claim 2, wherein the counter ion is ethylsulfate or methylsulfate.

4. The use according to claim 2, wherein R₁ is a linear or branched, saturated or unsaturated, C₁₆ - C₁₈ aliphatic group.

5. The use according to claim 1 or 2, wherein the at least one hydrophobic component is mineral oil; vegetable oil; or mixtures thereof.

6. The use of any one of claims 1-5, wherein the non-ionic surfactant comprises less than 40% by wt. of the total composition.

7. The use of any one of claims 1-6, wherein the imidazolines are between 10% and 90% cyclized.

8. The use of any one of claims 1-7, wherein the non-ionic surfactant is a glycol diester selected from the group consisting of oleic, stearic and palmitic acids.

9. A method for reducing the adhesion between a tissue web and a fabric surface comprising:
- providing a composition comprising
a) hydrophobic cyclic and/or linear quaternized aminoamides;
b) at least one hydrophobic component other than an aminoamide; and
c) non-ionic surfactant(s);
wherein the quaternized aminoamides are low molecular weight imidazoline and non-cyclic aminoamide quats and/or mixtures thereof and comprise from 40% to 75% by weight of the total composition; the at least one hydrophobic component is mineral oil, vegetable oil, silicon oil, polyalphaolefins and/or mixtures thereof and comprises from 5% to 40% by weight of the total composition; and the non-ionic surfactant(s) are glycol and/or ester thereof, mono- and di-esters of fatty acids, and/or mixtures thereof and comprise from 10% to 30% by weight of the total composition; and
- applying the composition to a fabric surface, which is a TAD fabric surface.

10. The method of claim 9, wherein the composition is applied to the fabric surface by spraying.

## Patentansprüche

1. Verwendung einer Zusammensetzung zum Reduzieren der Adhäsion von feuchtem Gewebe von einer lufttrocknenden Gewebeoberfläche (TAD) umfassend:
a) hydrophobe, quaternisierte Aminoamid(e);
b) mindestens eine andere hydrophobe Komponente als ein Aminoamid; und
c) nichtionische oberflächenaktive Mittel;
wobei die hydrophoben quaternisierten Aminoamide mit niedrigem Molekulargewicht Imidazolin und nicht-cyclische quartäres Aminoamid und/oder Mischungen davon sind, und 40 Gew.-% bis 75 Gew.-% der Gesamtzusammensetzung aufweisen; die mindestens eine hydrophobe Komponente ein Mineralöl, ein Pflanzenöl, ein Silikonöl, Polyalphaolefin und/oder Mischungen davon ist und 5 bis 40 Gew .-% der gesamten Zusammensetzung umfasst; und das/die nichtionische(n) grenzflächenaktive(n) Mittel ein Glykol und/oder dessen Ester, Mono- und Diester von Fettsäuren und/oder Mischungen davon sind und 10 bis 30 Gew .-% der Gesamtzusammensetzung umfassen.

2. Verwendung nach Anspruch 1, wobei die quaternisierte(n) Aminosäure(n) Imidazolin mit niedrigem Molekulargewicht mit der Struktur der Formel I; 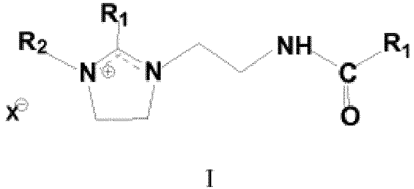 oder
nicht-cyclische Aminoamide mit der Struktur der Formel II; 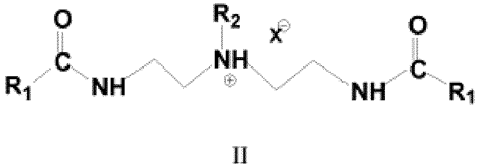 und ihre Mischungen ist; in welcher
R₁ eine lineare oder verzweigte, gesättigte oder ungesättigte C₁₂-C₂₂ aliphatische Gruppe ist;
R₂ eine Methyl- oder Ethylgruppe ist; und
X ein Gegenion ist.

3. Verwendung nach Anspruch 2, wobei das Gegenion Ethylsulfat oder Methylsulfat ist.

4. Verwendung nach Anspruch 2, wobei R₁ eine lineare oder verzweigte, gesättigte oder ungesättigte aliphatische C₁₆-C₁₈-Gruppe ist.

5. Verwendung nach Anspruch 1 oder 2, wobei die mindestens eine hydrophobe Komponente ein Mineralöl; Pflanzenöl; oder ihre Mischungen ist.

6. Verwendung nach einem der Ansprüche 1 bis 5, wobei das nichtionische Tensid weniger als 40 Gew .-% der Gesamtzusammensetzung ausmacht.

7. Verwendung nach einem der Ansprüche 1 bis 6, wobei die Imidazoline zwischen 10% und 90% cyclisiert sind.

8. Verwendung nach einem der Ansprüche 1 bis 7, wobei das nichtionische Tensid ein Glykoldiester ist, ausgewählt aus der Gruppe bestehend aus Öl-, Stearin- und Palmitinsäuren.

9. Verfahren zur Verringerung der Haftung zwischen einer Gewebebahn und einer Gewebeoberfläche, umfassend:
- Bereitstellen einer Zusammensetzung umfassend
a) cyclische und/oder lineare hydrophobe quaternisierte Aminoamide;
b) mindestens eine andere hydrophobe Komponente als ein Aminoamid; und
c) nichtionische oberflächenaktive Mittel;
wobei die quaternisierten Aminoamide niedermolekulares Imidazolin und nicht-cyclisches quartäre Aminoamide und/oder Mischungen davon sind und 40 bis 75 Gew .-% der Gesamtzusammensetzung umfassen; die mindestens eine hydrophobe Komponente Mineralöl, Pflanzenöl, Silikonöl, Polyalphaolefine und/oder Mischungen davon ist und 5 bis 40 Gew .-% der gesamten Zusammensetzung umfasst; und das nichtionische (n) grenzflächenaktive (n) Mittel das Glykol und/oder der Ester davon, Fettsäuremono- und -diester und/oder Mischungen davon ist und 10 bis 30 Gew .-% der Zusammensetzung insgesamt umfasst; und
- Aufbringen der Zusammensetzung auf eine Gewebeoberfläche, die eine TAD-Gewebeoberfläche ist.

10. Verfahren nach Anspruch 9, wobei die Zusammensetzung durch Sprühen auf die Oberfläche des Gewebes aufgebracht wird.

## Revendications

1. Utilisation d'une composition comprenant:
a) aminoamide quaternisé hydrophobe(s);
b) au moins un composant hydrophobe autre qu'un aminoamide; et
c) agent(s) tensioactif(s) non ionique(s);
dans laquelle le ou les aminoamides quaternisés hydrophobes sont de l'imidazoline de faible poids moléculaire et des quaternates d'aminoamide non cycliques et/ou leurs mélanges et comprennent de 40% à 75% en poids de la composition totale; le au moins un composant hydrophobe est une huile minérale, une huile végétale, une huile de silicone, des polyalphaoléfines et/ou leurs mélanges et comprend de 5% à 40% en poids de la composition totale; et le(s) tensioactif(s) non ionique(s) sont un glycol et/ou ses esters, mono- et diesters d'acide gras et/ou leurs mélanges et comprennent de 10 à 30% en poids de la composition totale pour réduire l'adhérence de tissu humide à partir d'une surface de tissu de séchage à l'air (TAD).

2. Utilisation selon la revendication 1, dans laquelle le ou les aminoamides quaternisés
sont de l'imidazoline de faible poids moléculaire ayant la structure de la formule I; 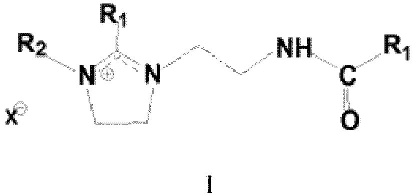 ou
des aminoamides non cycliques ayant la structure de formule II; 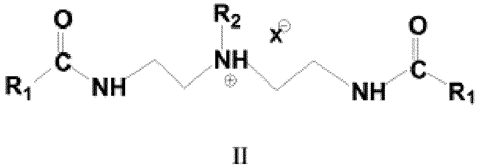 et leurs mélanges; dans laquelle
R1 est un groupe aliphatique en C₁₂ - C₂₂ linéaire ou ramifié, saturé ou insaturé;
R2 est un groupe méthyle ou éthyle; et
X est un contre-ion.

3. Utilisation selon la revendication 2, dans laquelle le contre-ion est l'éthylsulfate ou le méthylsulfate.

4. Utilisation selon la revendication 2, dans laquelle R1 est un groupe aliphatique en C₁₆-C₁₈, linéaire ou ramifié, saturé ou insaturé.

5. Utilisation selon la revendication 1 ou 2, dans laquelle le au moins un composant hydrophobe est une huile minérale; huile végétale; ou leurs mélanges.

6. Utilisation selon l'une quelconque des revendications 1 à 5, dans laquelle le tensioactif non ionique comprend moins de 40% en poids de la composition totale.

7. Utilisation selon l'une quelconque des revendications 1 à 6, dans laquelle les imidazolines sont cyclisées entre 10% et 90%.

8. Utilisation selon l'une quelconque des revendications 1 à 7, dans laquelle le tensioactif non ionique est un diester de glycol choisi dans le groupe constitué par les acides oléique, stéarique et palmitique.

9. Procédé pour réduire l'adhérence entre une bande de tissu et une surface de tissu comprenant:
- fournir une composition comprenant
a) les aminoamides quaternaires cycliques et/ou linéaires hydrophobes;
b) au moins un composant hydrophobe autre qu'un aminoamide; et
c) agent(s) tensioactif(s) non ionique(s);
dans lequel les aminoamides quaternisés sont de l'imidazoline de faible masse moléculaire et de quaternates l'aminoamide non cyclique et/ou leurs mélanges et comprennent de 40% à 75% en poids de la composition totale; le au moins un composant hydrophobe est l'huile minérale, l'huile végétale, l'huile de silicone, les polyalphaoléfines et/ou leurs mélanges et comprend de 5% à 40% poids de la composition totale; et le ou les agents tensioactifs non ioniques sont le glycol et/ou l'ester de ceux-ci, des mono- et diesters d'acides gras, et/ou leurs mélanges et comprennent de 10% à 30% en poids de la composition totale; et
- appliquer la composition sur une surface de tissu, qui est une surface de tissu TAD.

10. Procédé selon la revendication 9, dans lequel la composition est appliquée sur la surface du tissu par pulvérisation.
